# EUROPEAN PATENT SPECIFICATION

(11) **EP 2 053 382 B1**
(45) Date of publication and mention of the grant of the patent: **17.11.2010**
(21) Application number: 07301484.7
(22) Date of filing: 23.10.2007
(51) Int. Cl.: G01N 21/01, G01N 21/21, G01B 11/06

(54) **Sample holder for analysing a sample at a fixed incidence angle, an ellipsometer comprising such an element and an ellipsometric method for analysing a sample**
Probenhalter zur Analyse einer Probe bei fixem Einfallwinkel, Ellipsometer mit derartigem Element und ellipsometrisches Verfahren für Probenanalyse
Porte-échantillons pour analyser un échantillon à un angle d'incidence fixe, ellipsomètre comportant un tel élément et procédé ellipsométrique pour analyser un échantillon

(43) Date of publication of application: 29.04.2009
(73) Proprietor: Horiba Jobin Yvon S.A.S., 91160 Longjumeau (FR)
(72) Inventor: Bos, Francis, 91160, LONGJUMEAU (FR); Cattelan, Denis, 92160, ANTONY (FR); Lerondeau, Cécile, 92500, RUEIL-MALMAISON (FR)
(74) Representative: Michelet, Alain

(56) References cited:
- EP-A- 1 376 100
- US-A- 6 128 093
- US-A1- 2003 189 692
- US-B1- 6 840 634
- US-B1- 6 940 595
- US-B1- 7 084 978
- WOOLLAM ET AL: "Spectroscopic ellipsometry studies of indium tin oxide and other flat panel display multilayer materials" THIN SOLID FILMS, ELSEVIER-SEQUOIA S.A. LAUSANNE, CH, vol. 241, no. 1-2, 1 April 1994 (1994-04-01), pages 44-46, XP022556444 ISSN: 0040-6090

## Description

The invention concerns a sample holder for analysing a sample at a fixed incidence angle, an ellipsometer comprising a such element and an ellipsometric method for analysing a sample.

Ellipsometry is an optical technique that uses polarized light to measure the dielectric properties of a sample. The most common application of ellipsometry is the analysis of very thin films such as layers on wafers.

The use of ellipsometry is particularly attractive. They are nondestructive techniques, such that it is suitable for in situ observation, and they are extremely sensitive.

Through the analysis of the state of polarization of the light that interacts with the sample, ellipsometry can yield information about such films like thickness, morphology, or chemical composition.

The most common ellipsometer configuration is a reflection ellipsometer, although transmission ellipsometers are usually used to measure the transmission of a sample.

Transmission ellipsometry gives complementary information as disclosed in the document B. D. Johns, W. A. Mc Gahan, J. A. Woollam, "Spectroscopic ellipsometry studies of indium tin Oxyde and other Flat Panel Display Multilayer Materials", Thin Solid Films, p: 241-253, 1994, vol. 25.

The sample is usually placed on a sample holder at a fixed position. The surface of the sample is lit by an incident light beam and one or more polarization states of this beam are compared to one or more polarization states of the transmitted light beam.

It is sometimes interesting to realise successive measurements such as normal incidence transmission ellipsometry measurement and transmission ellipsometry measurement at oblique incidence and/or reflection ellipsometry measurement at oblique incidence.

Some transmission ellipsometers comprise an automatic goniometer able to be moved in order to vary the incidence angle of the incident light beam with respect to the sample surface. It is thus possible to place successively the light beam at normal incidence with respect to the sample surface and at oblique incidence with respect to the sample surface.

However, such ellipsometers are so complex and expensive that most of the ellipsometers do not comprise a goniometer.

Classical ellipsometers allow transmission ellipsometry measurements with a fixed incidence angle. Only one transmission ellipsometry measurement at normal incidence or at oblique incidence is possible.

US 2003/0189692 A1 discloses a sample holder having the features defined in the preamble of claim 1. This document is not directed to the field of ellipsometry.

One aim of the present invention consists to provide a sample holder for analysing a sample at a fixed incidence angle enabling to realise normal incidence transmission ellipsometry measurement and transmission ellipsometry measurement at oblique incidence with the same sample holder and without moving it between the different measurements.

Another aim of the present invention consists to provide a sample holder for analysing a sample at a fixed incidence angle enabling to realise the transmission ellipsometry measurement at oblique incidence and the reflection ellipsometry measurement at oblique incidence without moving the sample on the sample holder by moving the sample holder only.

The manufacture of such sample holder is simple and cheap.

Another aim of the present invention consists to provide an ellipsometer for analysing a sample at a fixed incidence angle comprising a such sample holder. This leads to a simpler, more compact and cheaper ellipsometer.

Another aim of the present invention consists to provide an ellipsometric method for analysing a sample at a fixed incidence angle by the ellipsometer above cited. It is possible to measure the transmission response of the sample at normal incidence, the transmission of the polarised sample and the ellipsometric response by reflection or by transmission of the sample with the same sample holder.

To this end, the invention concerns a sample holder for analysing a sample at one out of two fixed incidence angles, said sample having a transmission surface and a reflexion surface, said sample holder being able to be crossed by an incident light beam and comprising a first positioning means able to receive the sample for an analysis wherein the incident light beam crosses the sample normally with respect to the sample transmission surface.

According to the invention the sample holder comprises:
- optical means having a surface able to reflect the incident light beam coming from the first positioning means, in order to generate a first reflected light beam, said incident light beam being reflected on the surface of the optical means according to a fixed incidence angle (α), and
- a second positioning means able to receive the sample for another analysis wherein the sample is crossed by the first reflected light beam, said first reflected light beam being inclined with respect to the sample transmission surface,
- the sample holder comprises a cavity, the optical means being disposed in the cavity of the sample holder,
- the first positioning means is a surface including an opening,
- the second positioning means is a surface including an opening, the cavity being open through the surfaces of the first and the second positioning means, the surface of the first positioning means being inclined with respect to the surface of the optical means of an angle (90-α) and the surface of the second positioning means being parallel to the surface of the optical means

The sample holder for analysing a sample at a fixed incidence angle, according to the invention, enables to realise normal incidence transmission ellipsometry measurement and transmission ellipsometry measurement at oblique incidence with the same sample holder and without moving it between the different measurements.

The manufacture of such sample holder is simple and cheap.

According to various preferred embodiments, the present invention also concerns the characteristics below:
- the sample holder comprises a lower part whereon is disposed the optical means and an upper part comprising the first and the second positioning means,
- the sample holder comprises two suction paths, each suction paths having a top end and a bottom end, the top end of a suction path being in contact with one of the surface of the sample, when this one is placed on a positioning means, in order to fix the sample onto the first or the second surfaces of the sample holder.

Furthermore, the invention concerns an ellipsometer for analysing a sample at a fixed incidence angle comprising an excitation source able to emit the incident light beam according to a fixed incidence angle (α) and a detection system able to measure intensity of the first reflected light beam.

According to the invention, the ellipsometer for analysing a sample comprises a sample holder as above described, the sample holder being disposed at a fixed position in said ellipsometer in order to permit the analysis of the sample by normal incidence transmission ellipsometry and by transmission ellipsometry at oblique incidence without moving the sample holder from its fixed position.

The ellipsometer for analysing a sample at a fixed incidence angle, according to the invention, enables to realise normal incidence transmission ellipsometry measurement and transmission ellipsometry measurement at oblique incidence with the same sample holder and without moving it between the different measurements.

This ellipsometer is simple, compact and cheap.

According to various preferred embodiments, the present invention also concerns the characteristics below:
- the ellipsometer for analysing a sample comprises suction paths connected to the respective bottom ends of the suction paths of the sample holder,
- the ellipsometer for analysing a sample comprises a motorised table whereon is fixed the sample holder, said motorised table able to move automatically the sample holder according to the direction X, Y, Z between a position wherein the incident light beam is reflected on the surface of the optical means and a position wherein the incident light beam is reflected onto the sample reflection surface of the sample when the sample is placed on the second positioning means.

Furthermore, the invention concerns an ellipsometric method for analysing a sample at a fixed incidence angle by an ellipsometer as above described, comprising a step of analysing the sample by normal incidence transmission ellipsometry, said sample being disposed on the first positioning means of the sample holder wherein the incident light beam is normal to the sample transmission surface and the sample holder being positioned at a first position wherein the incident light beam is reflected onto the surface of the optical means, producing the first reflected light beam.

According to the invention:
- the sample is moved from the first positioning means to the second positioning means wherein the first reflected light beam crosses the sample and is inclined with respect to the sample transmission surface, the sample being moved without moving the sample holder which is positioned at the first position, and
- the sample being disposed on said second positioning means, this one is analysed by transmission ellipsometry at oblique incidence, the incidence angle (α) between the incident light beam and the surface of the optical means being identical for the analysis by normal incidence transmission ellipsometry and the analysis by transmission ellipsometry at oblique incidence.

The ellipsometric method for analysing a sample at a fixed incidence angle, according to the invention, enables to measure the transmission of the sample and the transmission of the polarised sample at a fixed incidence angle with the same sample holder and without moving it between the measurements.

According to various preferred embodiments, the present invention also concerns the characteristics below:
- the sample being disposed on said second positioning means, the sample holder is moved and positioned at a second position wherein the incident light beam is reflected onto the reflexion surface of the sample, producing a second reflected light beam, the second reflected light beam being inclined with respect to the reflexion surface of the sample and the sample holder being moved at the second position without moving the sample, and
- the sample holder being positioned at the second position, the second reflected light beam is analysed by reflectivity ellipsometry,
- the ellipsometric method for analysing a sample at a fixed incidence angle comprises the operations of:
   o measuring the intensity and the polarisation properties of the first reflected light beam without sample on the sample holder,
   o measuring the intensity and the polarisation properties of the first reflected light beam with the sample disposed on the first positioning means of the sample holder, and
   o calculating the ratio between the intensity of the first reflected light beam without sample and the intensity of the first reflected light beam with sample in order to determine the transmission of the sample at normal incidence, and the ratio between the polarisation properties of the first reflected light beam without sample and the polarisation properties of the first reflected light beam with sample in order to determine the transmission ellipsometric properties of the sample at normal incidence.
- the ellipsometric method for analysing a sample at a fixed incidence angle comprises the operations of:
   o measuring the intensity and the polarisation properties of the first reflected light beam without sample on the sample holder,
   o measuring the intensity and the polarisation properties of the first reflected light beam with the sample disposed on the second positioning means of the sample holder, and
   o calculating the ratio between the intensity of the first reflected light beam without sample and the intensity of the first reflected light beam with sample in order to determine the transmission of the sample at oblique incidence, and the ratio between the polarisation properties of the first reflected light beam without sample and the polarisation properties of the first reflected light beam with sample in order to determine the transmission ellipsometric properties of the sample at oblique incidence,
- the ellipsometric method for analysing a sample at a fixed incidence angle comprises a reflectivity ellipsometry measurement of the sample, the sample holder being disposed on a motorised table able to move automatically the sample holder according to the direction X, Y, Z between the first position of the sample holder wherein the incident light beam is reflected onto the optical means and the second position of the sample holder wherein the incident light beam is reflected onto the sample reflexion surface, and said reflectivity ellipsometry measurement being realised when the sample is positioned on the second positioning means and when the incident light beam is reflected onto the sample reflexion surface.

This ellipsometric method for analysing a sample at a fixed incidence angle, according to the invention, enables to obtain the ellipsometric response of the sample.

The description of the invention is illustrated by the following drawings in which:
- Figure 1 represents a longitudinal section of a sample holder with a sample positioned for a normal incidence transmission ellipsometry measurement, according to one preferred embodiment of the invention ;
- Figure 2 represents a longitudinal section of the sample holder with a sample positioned for a transmission ellipsometry measurement at oblique incidence, according to the precedent preferred embodiment ;
- Figure 3 represents a longitudinal section of the sample holder mounted on a motorised table for a reflectivity ellipsometry measurement at oblique incidence, according to another preferred embodiment ;
- Figure 4 represents a longitudinal section of a sample holder comprising suction paths, according to another preferred embodiment of the invention ;

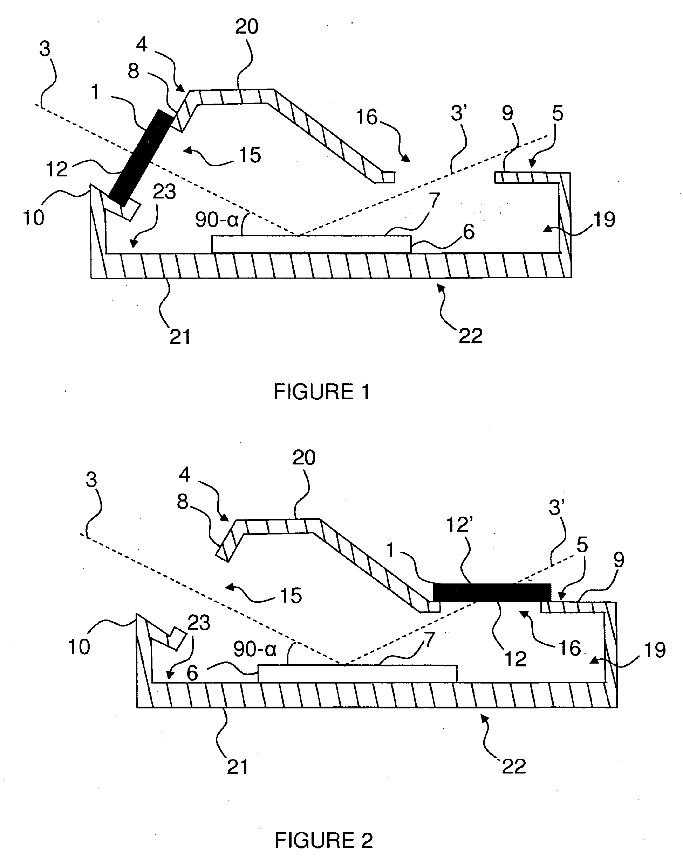

Figure 1 represents a longitudinal section of a sample holder with a sample 1 positioned for a normal incidence transmission ellipsometry measurement, according to one preferred embodiment of the invention.

The sample 1 has a transmission surface 12 and a reflexion surface 12'.

The sample holder comprises a body able to be crossed by an incident light beam 3.

The sample holder comprises a first positioning means 4 able to receive the sample 1 for an analysis by normal incidence transmission ellipsometry. The incident light beam 3 crosses the sample 1 normally with respect to the sample transmission surface 12.

The sample holder comprises optical means 6 having a surface 7 able to reflect the incident light beam 3 coming from the first positioning means 4, in order to generate a first reflected light beam 3'.

The incident light beam 3 is reflected on the surface 7 of the optical means 6, according to a fixed incidence angle (α).

The incidence angle (α) is comprised between 0° and 90° and is advantageously equal to 70 °.

The sample holder comprises a second positioning means 5 able to receive the sample 1 for a transmission ellipsometry analysis at oblique incidence, as illustrated in figure 2.

The first reflected light beam 3' is transmitted across the sample holder toward the second positioning means 5. The first reflected light beam 3' is inclined with respect to the sample transmission surface 12 and crosses the sample 1.

The sample 1 can be moved from a positioning means 4, 5 to another positioning means 4, 5 without moving the sample holder.

The sample holder comprises a cavity 19 enabling the incident 3 and the reflected 3' light beam to be transmitted in the sample holder, from the first positioning means 4 to the second positioning means 5. The optical means 6 is disposed in the cavity 19 of the sample holder.

The first positioning means 4 can be a surface 8 including an opening 15 and the second positioning means 5 can be a surface 9 including an opening 16. The cavity 19 of the sample holder is open through the surfaces 8, 9 of the first and the second positioning means.

The openings 8, 9 of the first 4 and second 5 positioning means are respectively crossed by the incident light beam 3 and the first reflected light beam 3'.

The openings 8, 9 of the first 4 and second 5 positioning means can be disk shaped or having another shape adapted to let the incident light beam 3 and the first reflected light beam 3' crossing the cavity 19.

The surface 8 of the first positioning means 4 is inclined with respect to the surface 7 of the optical means 6 of an angle (α) and the surface 9 of the second positioning means 5 is parallel to the surface 7 of the optical means 6.

The sample holder can be constituted of a single piece element and be made of a single material such as polymer or metallic material.

In a possible embodiment, the sample holder as defined by claim 1 can be made of a single piece element which comprises grooved channels configured to be crossed by the incident light beam 3 and the first reflected light beam 3'.

The optical means 6 can be a plane mirror having a surface 7, disposed at a fixed position in the cavity 19 of the sample holder.

The sample holder comprises a lower part 21 whereon is disposed the optical means 6 and an upper part 20 comprising the first 4 and the second 5 positioning means.

The lower part 21 of the sample holder comprises an external surface 22 which can be flat in order to be disposed in the compartment of an ellipsometer. It comprises an internal surface 23 whereon is disposed the optical means 6. The internal surface 23 can be flat or having an other shape.

The lower part 21 and the internal surface 23 are parallel.

The surface 8 of the first positioning means 4 and the surface 9 of the second positioning means 5 are disposed on the upper part 20 of the sample holder.

In the examples of figures 1 to 4, the first positioning means 4 is linked to a surface of the upper part 20 which is parallel to the internal surface 23 of the lower part 21 of the sample holder. An inclined surface of the upper part 20 links the parallel surface of the upper part 20 to the second positioning means 5 of the sample holder.

The first positioning means 4 comprises an abutment 10. When the sample 1 is on the first positioning means 4, it is stopped in the vertical direction by the abutment 10. The abutment 10 can be formed by an extension on the surface 8 of the first positioning means 4 of the sample holder, at its lower part. The abutment 10 comprises a surface in contact with the edge of the sample 1 for supporting this one.

The sample 1 is simply disposed on the first positioning means 4 or the second positioning means 5. No tool is needed to maintain the sample 1. The sample 1 can be easily and rapidly moved from one position to an other position.

The invention also concerns an ellipsometric method for analysing a sample 1 at a fixed incidence angle and an ellipsometer for analysing a sample 1 at a fixed incidence angle comprising a sample holder as above described and as defined in claim 1.

The ellipsometric method for analysing a sample 1 comprises a first step consisting in analysing the sample 1 by normal incidence transmission ellipsometry. The sample 1 is disposed on the first positioning means 4 of the sample holder wherein the incident light beam 3 is normal to the sample transmission surface 12.

The sample holder is positioned at a first position wherein the incident light beam 3 is reflected onto the surface 7 of the optical means 6, producing the first reflected light beam 3'.

The ellipsometer comprises an excitation section (not illustrated in the figures for simplification) including an excitation source able to emit an incident light beam 3 in a direction normal to the sample surface 12.

The excitation section can comprise a polarisation state generator (PSG) able to receive the incident light beam 3 and able to produce one or more independent polarization states of the incident light beam 3.

The excitation section can comprise optical means able to focus the light beam 3 onto the sample surface 12.

The incident light beam 3 is transmitted through the sample 1 toward the optical means 6 which reflect the incident light beam 3 toward the second positioning means 5, generating a first reflected light beam 3'.

The incident light beam 3 is inclined with respect to the mirror surface 7 of an angle (90-α) which is fixed. The second positioning means 5 supports no sample in this step.

The ellipsometer comprises an analysis section.

The analysis section can comprise a polarisation state analyser (PSA) able to analyse one or more independent polarization states of the first reflected light beam 3'.

It can comprise a detection system measuring the intensity of the first reflected light beam 3' and optical means able to focus the first reflected light beam 3' onto the detection system.

A second step of the ellipsometric method for analysing a sample 1 consists in moving the sample 1 from the first positioning means 4 toward the second positioning means 5 wherein the first reflected light beam 3' is inclined with respect to the sample transmission surface 12.

The sample 1 is moved without moving the sample holder from its position in the ellipsometer. The sample 1 can be moved manually or automatically.

A third step of the ellipsometric method for analysing a sample 1 consists in analysing the sample 1 by transmission ellipsometry at oblique incidence, the sample 1 being disposed on the second positioning means 5.

The incidence angle (α) between the incident light beam 3 and the surface 7 of the optical means 6 is identical for the analysis by normal incidence transmission ellipsometry and the analysis by transmission ellipsometry at oblique incidence.

The incident light beam 3 passes through the first positioning means 4, which supports no sample in this step. The incident light beam 3 is reflected on the surface 7 of the optical means 6 at the incidence angle (α), generating the first reflected light beam 3'. The first reflected light beam 3' is directed toward the sample 1 which is disposed on the second positioning means 5.

The first reflected light beam 3' is incident to the sample surface 12 according to the incidence angle (α).

The first reflected light beam 3' crosses the sample 1 and is detected by the detection system which measures its intensity.

The ellipsometric method for analysing a sample can further comprise several operations enabling to determinate the transmission and the polarisation properties of the sample 1.

The intensity of the first reflected light beam 3' is measured without sample 1 on the sample holder.

The intensity of the first reflected light beam 3' is measured with the sample 1 disposed on the first positioning means 4 on the sample holder.

The ratio between the intensity of the first reflected light beam 3' without sample 1 and the intensity of the first reflected light beam 3' with sample 1 is calculated in order to determine the transmission of the sample 1 at normal incidence. And the ratio between the polarisation properties of the first reflected light beam 3' without sample 1 and the polarisation properties of the first reflected light beam 3' with sample 1 is calculated in order to determine the transmission ellipsometric properties of the sample 1 at normal incidence.

In an other embodiment, the intensity of the first reflected light beam 3' is measured when the sample 1 is positioned on the second positioning means 5 on the sample holder.

The ratio between the intensity of the first reflected light beam 3' without sample 1 and the intensity of the first reflected light beam 3' with sample 1 is calculated in order to determine the transmission of the sample 1 at oblique incidence. And the ratio between the polarisation properties of the first reflected light beam 3' without sample 1 and the polarisation properties of the first reflected light beam 3' with sample 1 is calculated in order to determine the transmission ellipsometric properties of the sample 1 at oblique incidence.

The ellipsometric method for analysing a sample can comprises a fourth step wherein the sample holder is moved and positioned at a second position wherein the incident light beam 3 is reflected onto the reflexion surface 12' of the sample 1, producing a second reflected light beam 3". The sample 1 is disposed on the second positioning means 5. The second reflected light beam 3" is inclined with respect to the reflexion surface 12' of the sample 1. The sample holder is moved at the second position without moving the sample 1.

During a fifth step of the ellipsometric method for analysing a sample, the second reflected light beam 3" is analysed by reflectivity ellipsometry. The sample holder is positioned at the second position during the reflectivity ellipsometry measurement.

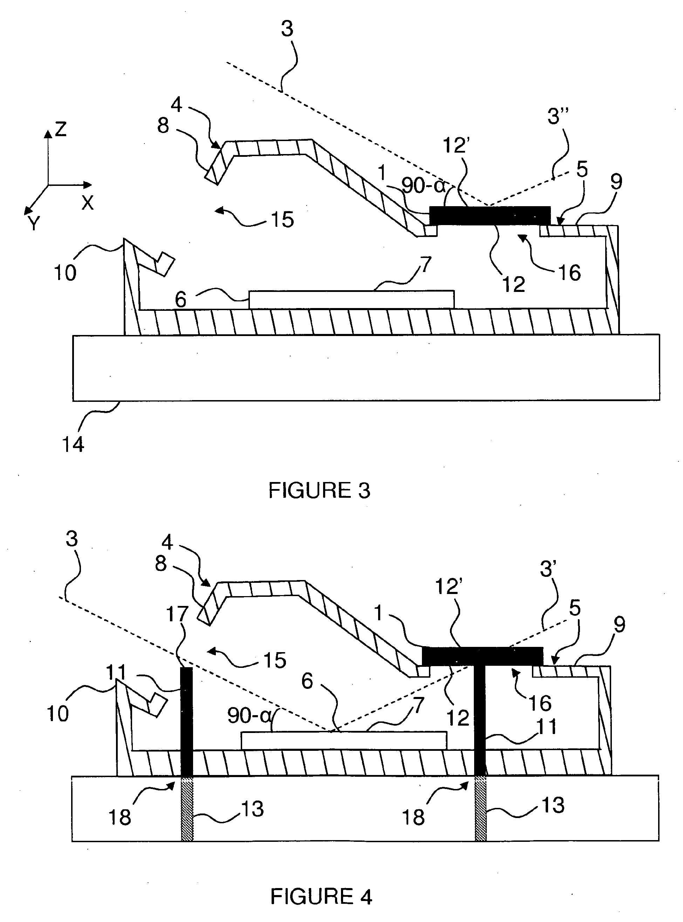

In another preferred embodiment of the present invention, the sample holder comprises two suction paths 11, as illustrated in figure 4. Each suction path 11 has a top end 17 and a bottom end 18. The top end 17 of a suction path 11 is in contact with one of the surface 12, 12' of the sample 1, when this one is placed on one positioning means 4, 5.

The ellipsometer comprises suction paths 13 connected to the respective bottom ends 18 of the suction paths 11 of the sample holder.

When the sample 1 is placed on one of the positioning means 4, 5, the air is suck in the suction paths 11 of the sample holder and the suction paths 13 of the ellipsometer, in order to fix the sample 1 onto the first 8 or the second 9 surface of the sample holder.

In another preferred embodiment of the invention, as illustrated in the figure 3, the ellipsometer can comprise a motorised table 14 whereon is disposed the sample holder. In this step, the sample 1 is placed on the second positioning means 5.

The motorised table 14 enables to move automatically the sample holder according to the direction X, Y, Z between the first position wherein the incident light beam 3 is reflected onto the optical means 6 and the second position wherein the incident light beam 3 is reflected onto the sample reflexion surface 12'. The reflectivity ellipsometry measurement is realised when the incident light beam 3 is reflected onto the sample reflexion surface 12'. One obtains the ellipsometric response of the sample 1.

Thus, the sample holder of the present invention permits to realise normal incidence transmission ellipsometry measurements and transmission ellipsometry measurements at oblique incidence with a single sample holder, without moving it from the ellipsometer and with an ellipsometer realising measurements only at fixed incidence angle (α).

In an other preferred embodiment, transmission ellipsometry measurements at oblique incidence and ellipsometry measurements by reflection can be done with a single sample holder, without moving the sample from the second positioning means 5 of the sample 1 and with the same fixed incidence angle (α).

It is possible to use classical ellipsometer and reach the performances obtained with an ellipsometer comprising a goniometer. The using of the sample holder, according to the invention, enables to reduce the cost of the ellipsometer.

## Claims

1. A sample holder suitable for analysing a sample (1) at one out of two fixed incidence angles, said sample (1) having a transmission surface (12) and a reflexion surface (12'), said sample holder being able to be crossed by an incident light beam (3) and comprising :
- a first positioning means (4) suitable for receiving the sample (1) for an analysis wherein the incident light beam (3) crosses the sample (1) normally with respect to the sample transmission surface (12),
- optical means (6) having a surface (7) suitable for reflecting the incident light beam (3) coming from the first positioning means (4), in order to generate a first reflected light beam (3'), said incident light beam (3) being reflected on the surface (7) of the optical means (6) according to a fixed incidence angle (α),
- a second positioning means (5) suitable for receiving the sample (1) for an other analysis wherein the sample (1) is crossed by the first reflected light beam (3'), said first reflected light beam (3') being inclined with respect to the sample transmission surface (12), and
**characterised in that** :
- the sample holder comprises a cavity (19), the optical means (6) being disposed in the cavity (19) of the sample holder,
- the first positioning means (4) comprises a surface (8) including an opening (15),
- the second positioning means (5) comprises a surface (9) including an opening (16), the cavity (19) being open through the surfaces (8, 9) of the first and the second positioning means, the surface (8) of the first positioning means (4) being inclined with respect to the surface (7) of the optical means (6) of an angle (90-α) and the surface (9) of the second positioning means (5) being parallel to the surface (7) of the optical means (6).

2. A sample holder suitable for analysing a sample (1) at one out of two fixed incidence angles according to claim 1, **characterised in that** it comprises a lower part (21) whereon is disposed the optical means (6) and an upper part (20) comprising the first (4) and the second (5) positioning means.

3. A sample holder suitable for analysing a sample (1) at one out of two fixed incidence angles according to any one of claims 1 to 2, **characterised in that** it comprises two suction paths (11), each suction paths (11) having a top end (17) and a bottom end (18), the top end (17) of a suction path (11) being in contact with one of the surface (12, 12') of the sample (1), when this one is placed on a positioning means (4, 5), in order to fix the sample (1) onto the first (8) or the second (9) surfaces of the sample holder.

4. An ellipsometer suitable for analysing a sample (1) at one out of two fixed incidence angles, comprising an excitation source able to emit the incident light beam (3) according to a fixed incidence angle (α) and a detection system able to measure intensity of the first reflected light beam (3') **characterised in that** it comprises a sample holder according to any one of claims 1 to 3.

5. An ellipsometer suitable for analysing a sample (1) at one out of two fixed incidence angles according to claim 4, **characterised in that** it comprises suction paths (13) connected to the respective bottom ends (18) of the suction paths (11) of the sample holder.

6. An ellipsometer suitable for analysing a sample (1) at one out of two fixed incidence angles according to claim 4 or 5, **characterised in that** it comprises a motorised table (14) whereon is fixed the sample holder, said motorised table able to move automatically the sample holder according to the direction X, Y, Z between a position wherein the incident light beam (3) is reflected on the surface (7) of the optical means (6) and a position wherein the incident light beam (3) is reflected onto the sample reflection surface (12') of the sample (1), when the sample (1) is placed on the second positioning means (5).

7. An ellipsometric method suitable for analysing a sample (1) at one out of two fixed incidence angles by an ellipsometer according to any one of claims 4 to 6, comprising a step of analysing the sample (1) by normal incidence transmission ellipsometry, said sample (1) being disposed on the first positioning means (4) of the sample holder wherein the incident light beam (3) is normal to the sample transmission surface (12) and the sample holder being positioned at a first position wherein the incident light beam (3) is reflected onto the surface (7) of the optical means (6), producing the first reflected light beam (3'),
**characterised in that**:
- the sample (1) is moved from the first positioning means (4) to the second positioning means (5) wherein the first reflected light beam (3') crosses the sample (1) and is inclined with respect to the sample transmission surface (12), the sample (1) being moved without moving the sample holder which is positioned at the first position, and
- the sample (1) being disposed on said second positioning means (5), this one is analysed by transmission ellipsometry at oblique incidence, the incidence angle (α) between the incident light beam (3) and the surface (7) of the optical means (6) being identical for the analysis by normal incidence transmission ellipsometry and the analysis by transmission ellipsometry at oblique incidence.

8. An ellipsometric method suitable for analysing a sample (1) at one out of two fixed incidence angles by an ellipsometer according to claim 7, **characterised in that** :
- the sample (1) being disposed on said second positioning means (5), the sample holder is moved and positioned at a second position wherein the incident light beam (3) is reflected onto the reflexion surface (12') of the sample (1), producing a second reflected light beam (3"), the second reflected light beam (3") being inclined with respect to the reflexion surface (12') of the sample (1) and the sample holder being moved at the second position without moving the sample (1), and
- the sample holder being positioned at the second position, the second reflected light beam (3") is analysed by reflectivity ellipsometry.

9. An ellipsometric method suitable for analysing a sample (1) at one out of two fixed incidence angles according to claim 7 or 8, **characterised in that** it comprises the operations of:
- measuring the intensity and the polarisation properties of the first reflected light beam (3') without sample (1) on the sample holder,
- measuring the intensity and the polarisation properties of the first reflected light beam (3') with the sample (1) disposed on the first positioning means (4) of the sample holder, and
- calculating the ratio between the intensity of the first reflected light beam (3') without sample (1) and the intensity of the first reflected light beam (3') with sample (1) in order to determine the transmission of the sample (1) at normal incidence, and the ratio between the polarisation properties of the first reflected light beam (3') without sample (1) and the polarisation properties of the first reflected light beam (3') with sample (1) in order to determine the transmission ellipsometric properties of the sample (1) at normal incidence.

10. An ellipsometric method suitable for analysing a sample (1) at one out of two fixed incidence angles according to any one of claims 7 to 9, **characterised in that** it comprises the operations of:
- measuring the intensity and the polarisation properties of the first reflected light beam (3') without sample (1) on the sample holder,
- measuring the intensity and the polarisation properties of the first reflected light beam (3') with the sample (1) disposed on the second positioning means (5) of the sample holder, and
- calculating the ratio between the intensity of the first reflected light beam (3') without sample (1) and the intensity of the first reflected light beam (3') with sample (1) in order to determine the transmission of the sample (1) at oblique incidence, and the ratio between the polarisation properties of the first reflected light beam (3') without sample (1) and the polarisation properties of the first reflected light beam (3') with sample (1) in order to determine the transmission ellipsometric properties of the sample (1) at oblique incidence.

11. An ellipsometric method suitable for analysing a sample (1) at one out of two fixed incidence angles according to any one of claims 8 to 10, **characterised in that** it comprises a reflectivity ellipsometry measurement of the sample (1), the sample holder being disposed on a motorised table (14) able to move automatically the sample holder according to the direction X, Y, Z between the first position of the sample holder wherein the incident light beam (3) is reflected onto the optical means (6) and the second position of the sample holder wherein the incident light beam (3) is reflected onto the sample reflexion surface (12'), and said reflectivity ellipsometry measurement being realised when the sample (1) is positioned on the second positioning means (5) and when the incident light beam (3) is reflected onto the sample reflexion surface (12').

## Patentansprüche

1. Probenhalter zur Analyse einer Probe (1) bei einem von zwei fixen Einfallwinkeln, wobei die Probe (1) eine Transmissionsfläche (12) und eine Reflexionsfläche (12') aufweist, der Probenhalter durch einen einfallenden Lichtstrahl (3) durchbrochen werden kann und
- ein erstes Einstellmittel (4) zur Aufnahme der Probe (1) zur Analyse, wobei der einfallende Lichtstrahl (3) durch die Probe (1) normal in Bezug auf die Probentransmissionsfläche (12) hindurchtritt,
- ein optisches Mittel (6) mit einer Oberfläche (7) zum Reflektieren des vom ersten Einstellmittel (4) herrührenden einfallenden Lichtstrahls (3) zur Erzeugung eines ersten reflektierten Lichtstrahls (3'), wobei der einfallende Lichtstrahl (3) auf der Oberfläche (7) des optischen Mittels (6) entsprechend einem fixen Einfallwinkel α reflektiert wird,
- ein zweites Einstellmittel (5) zur Aufnahme der Probe (1) für eine weitere Analyse, wobei der erste reflektierte Lichtstrahl (3') durch die Probe hindurchtritt, wobei der erste reflektierte Lichtstrahl (3') in Bezug auf die Probentransmissionsfläche (12) geneigt ist,
umfasst und
**dadurch gekennzeichnet ist, dass**
- der Probenhalter einen Hohlraum (19) umfasst, wobei das optischen Mittel (6) in dem Hohlraum (19) des Probenhalters angeordnet ist,
- das erste Einstellmittel (4) eine Fläche (8) mit einer Öffnung (15) umfasst,
- das zweite Einstellmittel (5) eine Fläche (9) umfasst, die eine Öffnung (16) auf weist, wobei der Hohlraum (19) durch die Flächen (8, 9) des ersten und des zweiten Einstellmittels geöffnet ist, wobei die Fläche (8) des ersten Einstellmittels (4) in Bezug auf die Oberfläche (7) des optischen Mittels (6) in einem Winkel
(90-α) geneigt ist und die Fläche (9) des zweiten Einstellmittels parallel zur Fläche (7) des optischen Mittels (6) verläuft.

2. Probenhalter zur Analyse einer Probe (1) bei einem von zwei fixen Einfallwinkeln nach Anspruch 1,
**dadurch gekennzeichnet**
**dass** er ein unteres Teilstück (21) umfasst, auf dem das optische Mittel (6) sowie ein oberes Teilstück (20) angeordnet ist, welches das erste (4) und das zweite (5) Einstellmittel umfasst.

3. Probenhalter zur Analyse einer Probe (!9 bei einem von zwei fixen Einfallwinkeln, nach einem der Ansprüche 1 und 2,
**dadurch gekennzeichnet,**
**dass** er zwei Saugpfade (11) aufweist, wobei jeder der Saugpfade (11) ein oberes Ende (17) und ein unteres Ende (18) haben, wobei das obere Ende (17) des Saugpfads (11) mit einer der Flächen (12, 12') der Probe (1) in Kontakt steht, wenn diese eine auf ein Einstellmittel (4, 5) gesetzt ist, um die Probe (1) auf der ersten (8) oder der zweiten (9) Fläche des Probenhalters zu fixieren.

4. Ellipsometer zur Analyse einer Probe (1) bei einem von zwei fixen Einfallwinkeln mit einer Anregungsquelle zur Emission des einfallenden Lichtstrahls (3) in einem fixen Einfallwinkel (α) und einem Erfassungssystem zur Messung der Stärke des ersten reflektierten Lichtstrahls (3'),
**dadurch gekennzeichnet,**
**dass** es einen Probenhalter nach einem der Ansprüche 1 bis 3 umfasst.

5. Ellipsometer zur Analyse einer Probe (1) bei einem von zwei fixen Einfallwinkeln nach Anspruch 4,
**dadurch gekennzeichnet, ,**
**dass** es Saugpfade (13) umfasst, die mit den jeweiligen unteren Enden (18) der Saugpfade (11) des Probenhalters verbunden sind.

6. Ellipsometer zur Analyse einer Probe (1) bei einem von zwei fixen Einfallwinkeln nach Anspruch 4 oder 5,
**dadurch gekennzeichnet,**
**dass** es einen motorisch angetriebenen Tisch (14) mit einem auf ihm befestigten Probenhalter umfasst, wobei der motorisch angetriebene Tisch den Probenhalter automatisch entsprechend der X-, Y-, Z-Richtung zwischen einer Position bewegen kann, in der der einfallende Lichtstrahl (3) auf die Oberfläche (7) des optischen Mittels (6) reflektiert wird, und einer Position, bei der der einfallende Lichtstrahl (3) auf die Probenreflexionsfläche (12') der Probe (1) reflektiert wird, wenn die Probe (1) auf das zweite Einstellmittel (5) gesetzt wird.

7. Ellipsometrisches Verfahren zur Analyse einer Probe (1) bei einem von zwei fixen Einfallwinkeln mittels eines Ellipsometers nach einem der Ansprüche 4 bis 6, das einen Schritt zur Analyse der Probe (1) mittels Normal-Einfalltransmissionsellipsometrie umfasst, wobei die Probe (1) auf dem ersten Einstellmittel (4) des Probenhalters angeordnet ist, wobei der einfallende Lichtstrahl (3) normal zur Probentransmissionsfläche (12) verläuft, und der Probenhalter in einer ersten Stellung gehalten ist, wobei der einfallende Lichtstrahl (3) auf die Oberfläche (7) des optischen Mittels (6) reflektiert wird und den ersten reflektierten Lichtstrahl (3') erzeugt,
**dadurch gekennzeichnet, dass**
- die Probe (1) von dem ersten Einstellmittel (4) zu dem zweiten Einstellmittel (5) bewegt wird, wobei der erste reflektierte Lichtstrahl (3') die Probe (1) durchdringt und hinsichtlich der Probentransmissionsfläche (12) geneigt ist, wobei die Probe (1) bewegt wird, ohne dass der Probenhalter bewegt wird, der in der ersten Position eingestellt ist, und
- die auf dem zweiten Einstellmittel (5) angeordnete Probe (1) durch Transmissionsellipsometrie bei Schrägeinfall gemessen wird, wobei der Einfallwinkel (α) zwischen dem einfallenden Lichtstrahl (3) und der Oberfläche (7) des optischen Mittels (6) für die Analyse mittels Normal-Einfalltransmissionsellipsometrie und die Analyse mittels Transmissionsellipsometrie bei Schrägeinfall identisch ist.

8. Ellipsometrisches Verfahren zur Analyse einer Probe (1) bei einem von zwei fixen Einfallwinkeln mittels eines Ellipsometers nach Anspruch 7,
**dadurch gekennzeichnet, dass**
- während die Probe (1) auf dem zweiten Einstellmittel (5) angeordnet ist, der Probenhalter bewegt und in einer zweiten Stellung positioniert wird, wobei der einfallende Lichtstrahl (3) auf die Reflexionsfläche (12') der Probe (1) reflektiert wird wodurch er einen zweiten reflektierten Lichtstrahl (3") erzeugt, wobei der zweite reflektierte Lichtstrahl (3") in Bezug auf die Reflexionsfläche (12') der Probe (1) geneigt ist und der Probenhalter in der zweiten Stellung bewegt wird ohne die Probe (1) zu bewegen, und
- während der Probenhalter in der zweiten Stellung positioniert ist, der zweite reflektierte Lichtstrahl (3") mittels Reflexionsellipsometrie analysiert wird.

9. Ellipsometrisches Verfahren zur Analyse einer Probe (1) bei einem von zwei fixen Einfallwinkeln nach Anspruch 7 oder 8,
**dadurch gekennzeichnet,**
**dass** es die folgenden Schritte umfasst:
- Messen der Stärke und der Polarisationseigenschaften des ersten reflektierten Lichtstrahls (3') ohne Probe (1) auf dem Probenhalter,
- Messen der Stärke und der Polarisationseigenschaften des ersten reflektierten Lichtstrahls (3'), wobei die Probe (1) auf dem ersten Einstellmittel (4) des Probenhalters angeordnet ist, und
- Errechnen des Verhältnisses zwischen der Stärke des ersten reflektierten Lichtstrahls (3') ohne Probe (1) und der Stärke des ersten reflektierten Lichtstrahls (3') mit Probe (1) zur Bestimmung der Transmission der Probe (1) bei Normal-Einfall, und des Verhältnisses zwischen den Polarisationseigenschaften des ersten reflektierten Lichtstrahls (3') ohne Probe (1) und den Polarisationseigenschaften des ersten reflektierten Lichtstrahls (3') mit Probe (1) zur Bestimmung der transmissions-ellipsometrischen Eigenschaften der Probe (1) bei Normal-Einfall.

10. Ellipsometrisches Verfahren zur Analyse einer Probe (1) bei einem von zwei Einfallwinkeln nach einem der Ansprüche 7 bis 9,
**dadurch gekennzeichnet,**
**dass** es die folgenden Schritte umfasst:
- Messen der Stärke und der Polarisationseigenschaften des ersten reflektierten Lichtstrahls (3') ohne Probe (1) auf dem Probenhalter,
- Messen der Stärke und der Polarisationseigenschaften des ersten reflektierten Lichtstrahls (3') mit Probe (1) auf dem zweiten Einstellmittel (5) des Probenhalters, und
- Errechnen des Verhältnisses zwischen der Stärke des ersten reflektierten Lichtstrahls (3') ohne Probe (1) und der Stärke des ersten reflektierten Lichtstrahls (3') mit Probe (1) zur Bestimmung der Transmission der Probe (1) bei Schrägeinfall, und des Verhältnisses zwischen den Polarisationseigenschaften des ersten reflektierten Lichtstrahls (3') ohne Probe (1) und den Polarisationseigenschaften des ersten reflektierten Lichtstrahls (3') mit Probe (1) zur Bestimmung der transmissions-ellipsometrischen Eigenschaften der Probe (1) bei Schrägeinfall.

11. Ellipsometrisches Verfahren zur Analyse einer Probe (1) bei einem von zwei fixen Einfallwinkeln nach einem der Ansprüche 8 bis 10,
**dadurch gekennzeichnet,**
**dass** es eine Reflexionsellipsometriemessung der Probe (1) umfasst, wobei der Probenhalter auf einem motorisch betriebenen Tisch (14) angeordnet ist, der den Probenhalter entsprechend der X-, Y-, Z-Richtung zwischen der ersten Stellung des Probenhalters, in der der einfallende Lichtstrahl (3) auf dem optischen Mittel (6) reflektiert wird, und der zweiten Stellung des Probenhalters bewegen kann, in der der einfallende Lichtstrahl (3) auf die Probenreflexionsfläche (12') reflektiert wird, und die Reflexionsellipsometriemessung durchgeführt wird, wenn die Probe (1) auf dem zweiten Einstellmittel (5) positioniert ist und wenn der einfallende Lichtstrahl (3) auf der Probenreflexionsfläche (12') reflektiert wird.

## Revendications

1. Porte-échantillon approprié pour l'analyse d'un échantillon (1) suivant l'un de deux angles d'incidence fixes, ledit échantillon (1) ayant une surface de transmission (12) et une surface de réflexion (12'), ledit porte-échantillon pouvant être traversé par un faisceau lumineux incident (3) et comprenant :
- un premier moyen de positionnement (4) approprié pour recevoir l'échantillon (1) pour une analyse dans laquelle le faisceau lumineux incident (3) traverse l'échantillon (1) suivant une direction normale à la surface de transmission (12) de l'échantillon,
- un moyen optique (6) ayant une surface (7) appropriée pour réfléchir le faisceau lumineux incident (3) provenant du premier moyen de positionnement (4), afin de générer un premier faisceau lumineux réfléchi (3'), ledit faisceau lumineux incident (3) étant réfléchi sur la surface (7) du moyen optique (6) suivant un angle d'incidence fixe (α),
- un deuxième moyen de positionnement (5) approprié pour recevoir l'échantillon (1) pour une autre analyse dans laquelle l'échantillon (1) est traversé par le premier faisceau lumineux réfléchi (3'), ledit premier faisceau lumineux réfléchi (3') étant incliné par rapport à la surface de transmission (12) de l'échantillon, et
**caractérisé en ce que** :
- le porte-échantillon comprend une cavité (19), le moyen optique (6) étant disposé dans la cavité (19) du porte-échantillon,
- le premier moyen de positionnement (4) comprend une surface (8) comportant une ouverture (15),
- le deuxième moyen de positionnement (5) comprend une surface (9) comportant une ouverture (16), la cavité (19) étant ouverte à travers les surfaces (8, 9) des premier et deuxième moyens de positionnement, la surface (8) du premier moyen de positionnement (4) étant inclinée d'un angle (90 - α) par rapport à la surface (7) du moyen optique (6) et la surface (9) du deuxième moyen de positionnement (5) étant parallèle à la surface (7) du moyen optique (6).

2. Porte-échantillon approprié pour l'analyse d'un échantillon (1) suivant l'un de deux angles d'incidence fixes selon la revendication 1, **caractérisé en ce qu'**il comprend une partie inférieure (21) sur laquelle est disposé le moyen optique (6) et une partie supérieure (20) comprenant le premier (4) et le deuxième (5) moyens de positionnement.

3. Porte-échantillon approprié pour l'analyse d'un échantillon (1) suivant l'un de deux angles d'incidence fixes selon l'une quelconque des revendications 1 à 2, **caractérisé en ce qu'**il comprend deux canaux d'aspiration (11), chaque canal d'aspiration (11) ayant une extrémité haute (17) et une extrémité basse (18), l'extrémité haute (17) d'un canal d'aspiration (11) étant en contact avec l'une des surfaces (12, 12') de l'échantillon (1), lorsque celui-ci est placé sur un moyen de positionnement (4, 5), afin de fixer l'échantillon (1) sur la première (8) et la deuxième (9) surfaces du porte-échantillon.

4. Ellipsomètre approprié pour l'analyse d'un échantillon (1) suivant l'un de deux angles d'incidence fixes, comprenant une source d'excitation capable d'émettre le faisceau lumineux incident (3) suivant un angle d'incidence fixe (α) et un système de détection capable de mesurer l'intensité du premier faisceau lumineux réfléchi (3'), **caractérisé en ce qu'**il comprend un porte-échantillon selon l'une quelconque des revendications 1 à 3.

5. Ellipsomètre approprié pour l'analyse d'un échantillon (1) suivant l'un de deux angles d'incidence fixes selon la revendication 4, **caractérisé en ce qu'**il comprend des canaux d'aspiration (13) raccordés aux extrémités basses respectives (18) des canaux d'aspiration (11) du porte-échantillon.

6. Ellipsomètre approprié pour l'analyse d'un échantillon (1) suivant l'un de deux angles d'incidence fixes selon la revendication 4 ou 5, **caractérisé en ce qu'**il comprend une table motorisée (4) sur laquelle est fixé le porte-échantillon, ladite table motorisée étant capable de déplacer automatiquement le porte-échantillon suivant la direction X, Y, Z entre une position à laquelle le faisceau lumineux incident (3) est réfléchi sur la surface (7) du moyen optique (6) et une position à laquelle le faisceau lumineux incident (3) est réfléchi sur la surface de réflexion (12') de l'échantillon (1), lorsque l'échantillon (1) est placé sur le deuxième moyen de positionnement (5).

7. Procédé ellipsométrique approprié pour l'analyse d'un échantillon (1) suivant l'un de deux angles d'incidence fixes par un ellipsomètre selon l'une quelconque des revendications 4 à 6, comprenant une étape d'analyse de l'échantillon (1) par une technique d'ellipsométrie par transmission sous incidence normale, ledit échantillon (1) étant disposé sur le premier moyen de positionnement (4) du porte-échantillon, où le faisceau lumineux incident (3) est normal à la surface de transmission (12) de l'échantillon, et le porte-échantillon étant positionné à une première position à laquelle le faisceau lumineux incident (3) est réfléchi sur la surface (7) du moyen optique (6), produisant le premier faisceau lumineux réfléchi (3'),
**caractérisé en ce que** :
- l'échantillon (1) est déplacé du premier moyen de positionnement (4) vers le deuxième moyen de positionnement (5), où le premier faisceau lumineux réfléchi (3') traverse l'échantillon (1) et est incliné par rapport à la surface de transmission (12) de l'échantillon, l'échantillon (1) étant déplacé sans déplacement du porte-échantillon, qui est positionné à la première position, et
- l'échantillon (1) étant disposé sur ledit deuxième moyen de positionnement (5), il est analysé par une technique d'ellipsométrie par transmission sous incidence oblique, l'angle d'incidence (α) entre le faisceau lumineux incident (3) et la surface (7) du moyen optique (6) étant identique pour l'analyse par ellipsométrie par transmission sous incidence normale et l'analyse par ellipsométrie par transmission sous incidence oblique.

8. Procédé ellipsométrique approprié pour l'analyse d'un échantillon (1) suivant l'un de deux angles d'incidence fixes par un ellipsomètre selon la revendication 7, **caractérisé en ce que** :
- l'échantillon (1) étant disposé sur ledit deuxième moyen de positionnement (5), le porte-échantillon est déplacé et positionné à une deuxième position à laquelle le faisceau lumineux incident (3) est réfléchi sur la surface de réflexion (12') de l'échantillon (1), produisant un deuxième faisceau lumineux réfléchi (3 "), le deuxième faisceau lumineux réfléchi (3 ") étant incliné par rapport à la surface de réflexion (12') de l'échantillon (1) et le porte-échantillon étant déplacé à la deuxième position, sans déplacement de l'échantillon (1), et
- le porte-échantillon étant positionné à la deuxième position, le deuxième faisceau lumineux réfléchi (3") est analysé par une technique d'ellipsométrie par réflexion.

9. Procédé ellipsométrique approprié pour l'analyse d'un échantillon (1) suivant l'un de deux angles d'incidence fixes selon la revendication 7 ou 8, **caractérisé en ce qu'**il comprend les opérations consistant à :
- mesurer les propriétés d'intensité et de polarisation du premier faisceau lumineux réfléchi (3') sans l'échantillon (1) sur le porte-échantillon,
- mesurer les propriétés d'intensité et de polarisation du premier faisceau lumineux réfléchi (3') avec l'échantillon (1) disposé sur le premier moyen de positionnement (4) sur le porte-échantillon, et
- calculer le rapport entre l'intensité du premier faisceau lumineux réfléchi (3') sans l'échantillon (1) et l'intensité du premier faisceau lumineux réfléchi (3') avec l'échantillon (1), afin de déterminer la transmission de l'échantillon (1) sous incidence normale, et le rapport entre les propriétés de polarisation du premier faisceau lumineux réfléchi (3') sans l'échantillon (1) et les propriétés de polarisation du premier faisceau lumineux réfléchi (3') avec l'échantillon (1), afin de déterminer les propriétés ellipsométriques en transmission de l'échantillon (1) sous incidence normale.

10. Procédé ellipsométrique approprié pour l'analyse d'un échantillon (1) suivant l'un de deux angles d'incidence fixes selon l'une quelconque des revendications 7 à 9, **caractérisé en ce qu'**il comprend les opérations consistant à :
- mesurer les propriétés d'intensité et de polarisation du premier faisceau lumineux réfléchi (3') sans l'échantillon (1) sur le porte-échantillon,
- mesurer les propriétés d'intensité et de polarisation du premier faisceau lumineux réfléchi (3') avec l'échantillon (1) disposé sur le deuxième moyen de positionnement (5) sur le porte-échantillon, et
- calculer le rapport entre l'intensité du premier faisceau lumineux réfléchi (3') sans l'échantillon (1) et l'intensité du premier faisceau lumineux réfléchi (3') avec l'échantillon (1), afin de déterminer la transmission de l'échantillon (1) sous incidence oblique, et le rapport entre les propriétés de polarisation du premier faisceau lumineux réfléchi (3') sans l'échantillon (1) et les propriétés de polarisation du premier faisceau lumineux réfléchi (3') avec l'échantillon (1), afin de déterminer les propriétés ellipsométriques en transmission de l'échantillon (1) sous incidence oblique.

11. Procédé ellipsométrique approprié pour l'analyse d'un échantillon (1) suivant l'un de deux angles d'incidence fixes selon l'une quelconque des revendications 8 à 10, **caractérisé en ce qu'**il comprend une mesure d'ellipsométrie par réflexion sur l'échantillon (1), le porte-échantillon étant disposé sur une table motorisée (14) capable de déplacer automatiquement le porte-échantillon suivant la direction X, Y, Z entre la première position du porte-échantillon, à laquelle le faisceau lumineux incident (3) est réfléchi sur le moyen optique (6), et la deuxième position du porte-échantillon, à laquelle le faisceau lumineux incident (3) est réfléchi sur la surface de réflexion (12') de l'échantillon, et ladite mesure d'ellipsométrie par réflexion étant réalisée lorsque l'échantillon (1) est positionné sur le deuxième moyen de positionnement (5) et lorsque le faisceau lumineux incident (3) est réfléchi sur la surface de réflexion (12') de l'échantillon.
